# EUROPÄISCHE PATENTANMELDUNG

(11) **EP 0 875 734 A1**
(43) Veröffentlichungstag der Anmeldung: **04.11.1998**
(21) Anmeldenummer: 98107818.1
(22) Anmeldetag: 29.04.1998
(51) Int. Cl.: G01D 5/20

(54) **Induktiver Wegaufnehmer**

(30) Priorität: 30.04.1997 DE 19718150
(71) Anmelder: HOTTINGER BALDWIN MESSTECHNIK GMBH, D-64293 Darmstadt (DE)
(72) Erfinder: Kreuzer, Manfred, 64331 Weiterstadt (DE)
(74) Vertreter: Behrens, Helmut

(57) **Zusammenfassung**

Bei einem induktiven Wegaufnehmer in Halb- oder Vollbrückenschaltung bei dem nur in einer 1/4-Brücke eine aktive induktive Tauchspule (W1) angeordnet ist in der sich ein Tauchanker (T) bewegt und bei dem die anderen 1/4-Brückenzweige z. B. als passive ohmsche Widerstände ausgeführt sind, wird vorgeschlagen, die Nichtlinearität dieser Schaltungsanordnung dadurch zu korrigieren, daß die Windungszahl pro Längeneinheit der Tauchspule (W1) in Richtung der Eintauchtiefe stetig oder in Abschnitten stufenweise erhöht wird.

## Beschreibung

Die Erfindung bezieht sich auf einen induktiven Wegaufnehmer mit nur einer aktiven Induktionsspule in einer Wechselstrommeßbrücke (sog. aktive Viertelbrückenschaltung) und einem Tauchanker, die in Abhängigkeit vom zu messenden Weg relativ zueinander bewegbar sind.

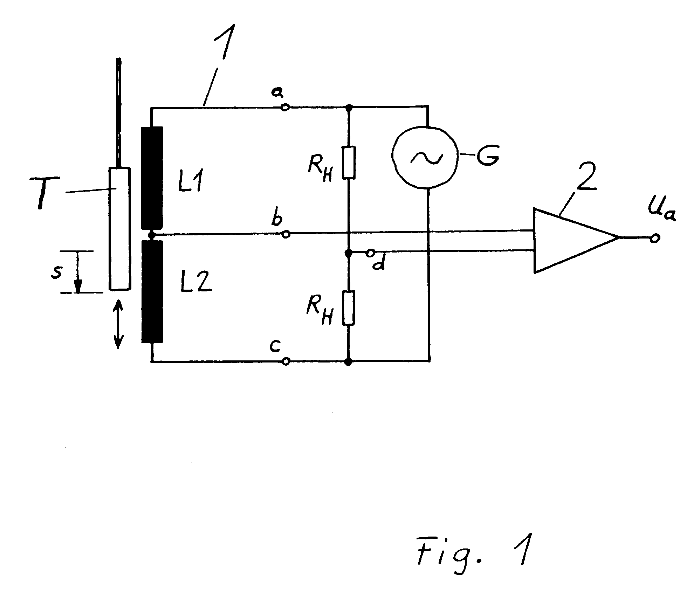

Induktionsspulen, in die weichmagnetische Kerne eintauchen, werden Tauchankergeber genannt. Im Handbuch für elektrisches Messen mechanischer Größen, VDI-Verlag Düsseldorf, 1967, Abschnitt D 4.5. , Bild D 4.5-1 sind diese Tauchankergeber beschrieben und dargestellt. Es wird darauf hingewiesen, daß diese Tauchankergeber nichtlinear sind und empfohlen, zur Erzielung einer guten Linearität zwei Geber zu einem Differential-Tauchankergeber zusammenzubauen (Bild D 4.5-2). Diese Aufnehmer sind heute weit verbreitet und werden "Induktive Aufnehmer in Halbbrückenschaltung" genannt (siehe hierzu auch den Band 3, SENSORIK, Sensoren und Mikroelektronik, expert verlag, 1993, ISBN 3-8169-1017-3, Abschnitt 9.1.1 Induktive Aufnehmer, S. 388 -390) . Die Fig. 1 der Zeichnung zeigt die Schaltung eines solchen induktiven Wegaufnehmers in Halbbrückenschaltung. Es sind zwei in Längsrichtung hintereinander liegende Induktionsspulen (L1 und L2) vorgesehen, die jeweils in einem Brückenzweig einer Wheatstone-Wechselstrombrücke angeordnet sind. Die beiden restlichen Brückenzweige weisen die ohm 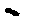 schen Widerstände R_{H} auf. Im Innern der beiden Induktionsspulen ist ein Tauchanker längsverschieblich. Die Nachteile der induktiven Aufnehmer in Halbbrückenschaltung sind insbesondere ihre große Länge und ihre Empfindlichkeit gegen Temperaturgradienten. Die Gesamtlänge dieser Aufnehmer ist bei ausgefahrenem Tauchanker in Meßendstellung deutlich größer als die dreifache Meßlänge und bei ungleichmäßiger Erwärmung (Erwärmung z.B. an einem Ende des Wegaufnehmers) treten infolge der temperaturabhängigen Kupferwiderstände der Spulen größere Meßfehler auf.

Bekannt sind ferner induktive Wegaufaufnehmer mit nur einer aktiven messenden Induktionsspule in einer 1/4-Brückenschaltung [Firmenschrift "A 02.25.0" der Firma Hottinger Baldwin Messtechnik GmbH, Darmstadt]. Die benachbarte nicht aktive 1/4-Brücke wird durch Ergänzungswiderstände gebildet, die dabei so ausgelegt werden, daß sie den starken Temperaturgang der Kupferwicklung der Induktionsspule der aktiven 1/4-Brücke kompensieren. Da die passive 1/4-Brücke die aktive 1/4-Brücke impedanzmäßig belastet, treten auch bei einem linearen Zusammenhang zwischen Meßweg und Impedanzänderung der aktiven Induktionsspule dennoch große Nichtlinearitäten der Relation Meßspannung/Meßweg auf. Die Nichtlinearitäten werden bisher dadurch verringert, daß relativ hochohmige Vorwiderstände in den beiden 1/4-Brückenzweigen eingesetzt werden. Dabei wird die Amplitude des Meßsignals jedoch stark reduziert (typisch auf = < 1% entsprechend = < 10 mV/V der angelegten Brückenspeisespannung), was die Fehlereinflüsse durch Temperaturänderungen und Störsignale wieder erhöht.

Der Erfindung liegt die Aufgabe zugrunde, einen Wegaufnehmer zu schaffen, der bei kurzer Baulänge das bei induktiven Halbbrücken übliche große Ausgangssignal von 80 mV/V liefert und der auch bei sich ändernden Umgebungseinflüssen ein genaues Meßergebnis liefert.

Erfindungsgemäß wird diese Aufgabe bei einem Wegaufnehmer nach dem Oberbegriff des Patentanspruchs 1 durch die im kennzeichnenden Anspruchsteil angegebenen Merkmale gelöst. Die Krümmung folgt vorzugsweise der Funktion eines Polynoms, bei dem das quadratische Glied (Parabelverlauf) dominiert. Bei dem erfindungsgemäß ausgestalteten Wegaufnehmer mit nur einer aktiven wegmessenden 1/4-Brücke ergibt sich ein meßtechnisch großes Ausgangssignal (80 mV/V und größer), eine ausgezeichnete Linearitätsabweichung von < 0,1% sowie eine sehr gute Nullpunkts- und Empfindlichkeitsstabilität verbunden mit einer gravierenden Verbesserung der Unempfindlichkeit gegenüber Temperatureinflüssen und elektrischen Störungen. Dadurch, daß nur eine Induktionsspule benötigt wird, ergibt sich eine äußerst kurze Bauform.

Dadurch, daß die Windungsabstände der Meßwicklung in axialer Richtung unterschiedlich sind, besitzt die Funktion der Impendanzänderung der Meßwicklung in Abhängigkeit vom Meßweg einen nichtlinearen, vorzugsweise gekrümmten Verlauf; dadurch lassen sich die Nichtlinearitäten, die infolge der Belastung der aktiven 1/4-Brücke durch die passive 1/4-Brücke auftreten können, auf einfachste Art im wesentlichen vollständig beseitigen. Dadurch, daß die Anzahl der Windungen pro axialer Längeneinheit veränderlich gewählt wird, lassen sich nicht nur die Nichtlinearitäten infolge der Belastung der aktiven 1/4-Brücke, sondern darüber hinaus auch typische Nichtlinearitäten in der Induktionsspule und des Tauchankers (weichmagnetischer Kern) auf einfachste Weise im wesentlichen vollständig beseitigen. Es kann dabei eine stetige Zunahme der Anzahl der Windungen pro Längeneinheit vom Tauchankereintrittsende aus oder zum Beispiel aus Fertigungsgründen eine schrittweise Zunahme mit abschnittweise konstanten, aber von Abschnitt zu Abschnitt unterschiedlichen Windungsabständen vorgesehen werden. Bei der Dimensionierung der Wicklung der Induktionsspule kann auch vorgesehen werden, daß eine oder mehrere ihrer Lagen einen konstanten Windungsabstand und nur eine oder mehrere weitere Lagen einen veränderlichen Windungsabstand besitzen.

In einer vorteilhaften Ausführungsform ist vorgesehen, daß in dem einen Zweig einer Halbbrücke die aktive Meßwicklung angeordnet ist und daß im ergänzenden Halbbrückenzweig ein oder mehrere temperaturabhängige Widerstände vorgesehen sind, die die temperaturabhängigen Impedanzänderungen der Meßwicklung kompensieren. Dabei ist eine räumliche Anordnung des oder der temperaturabhängigen Widerstände unmittelbar auf der Induktionsspule wegen der engen thermischen Kopplung besonders vorteilhaft.

In einer Weiterbildung der Erfindung ist vorgesehen, daß die Meßhalbbrücke bestehend aus der Meßwicklung und einem oder mehreren Kompensationswiderständen mittels zweier Widerstände zur Vollbrückenschaltung ergänzt ist. Diese beiden Widerstände können sowohl im Aufnehmer als auch im nachgeschalteten Meßverstärker selbst vorgesehen sein. Die Anordnung im Aufnehmer hat Vorteile bezüglich eines stabilen Nullpunktverhaltens, da Spannungsschwankungen in den Speiseleitungen oder Störspannungseinkopplungen in den beiden Meßleitungen beide Halbbrücken gleichmäßig beeinflussen und damit größtenteils kompensiert werden.

Besonders vorteilhaft im Hinblick auf die Verbesserung des Verhaltens bei Temperaturgradienten ist eine Ausführungsform der Erfindung, bei der im ergänzenden Brückenzweig eine induktionsarme Kompensationswicklung vorgesehen ist, die konzentrisch zur Meßwicklung angeordnet und so geschaltet ist, daß der Strom in ihren Teilwicklungen räumlich in entgegengesetzter Richtung fließt. Wählt man Gleichstromwiderstände (Kupferwiderstände) im wesentlichen gleicher Größe für Meßwicklung und Kompensationswicklung, so erhält man auf einfachste Weise eine Kompensation der temperaturabhängigen Impendanzänderung zu Null. Auch bei starken Temperaturgradienten treten dann praktisch keine Temperaturfehler auf. Fertigungstechnisch besonders günstig ist eine Paralleldrahtwicklung (Bifilarwicklung) der Kompensationswicklung.

Eine enge thermische Kopplung und damit eine Verringerung der Temperaturabhängigkeit erreicht man dadurch, daß sich die Wicklung der Kompensationsspule axial über die gleiche Länge wie die Meßwicklung erstreckt und beide Wicklungen übereinander gewickelt sind. Dabei kann vorgesehen werden, daß die Kompensationswicklung über die Meßwicklung gewickelt wird oder daß die Meßwicklung über die Kompensationswicklung gewickelt wird.

Vorteilhaft im Hinblick auf die Unterdrückung von Einflüssen von Temperaturgradienten ist eine Weiterbildung der Erfindung, bei der die Windungsabstände der Kompensationswicklung sich im gleichen Verhältnis ändern wie die der Meßwicklung.

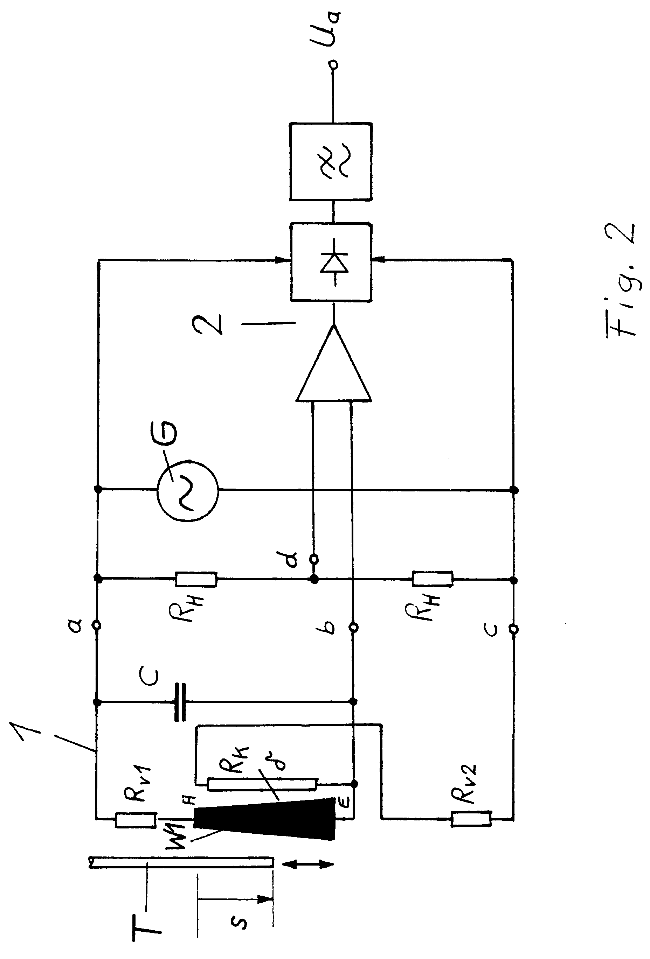

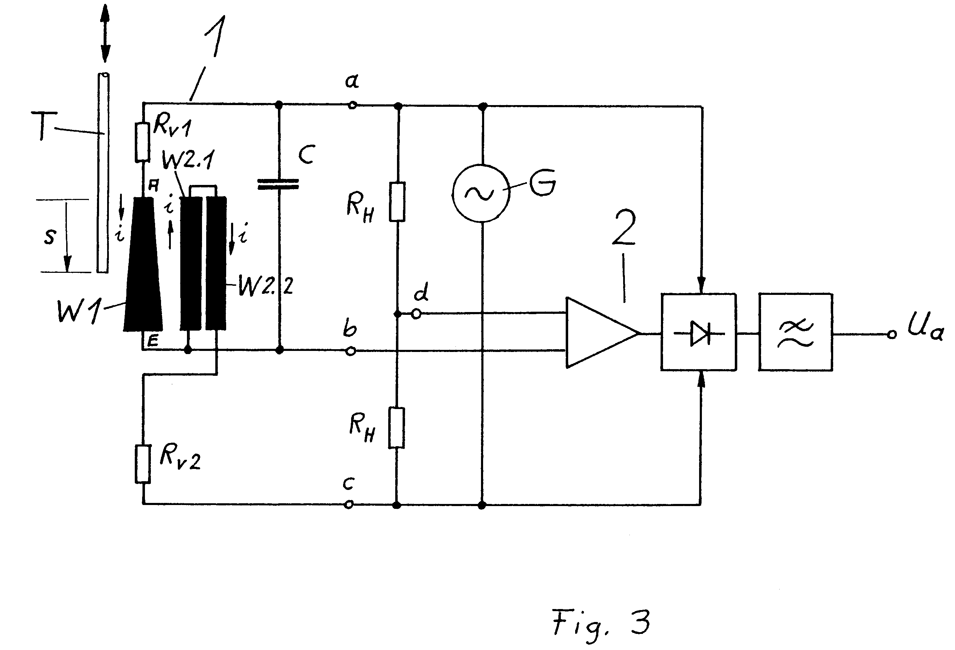

Ausführungsformen der Erfindung sind in der Zeichnung in den Figuren 2 und 3 dargestellt und nachfolgend näher beschrieben. Es zeigt
- Fig. 1:: einen induktiven Wegaufnehmer bekannter Bauart
- Fig. 2:: eine Ausführungsform eines Wegaufnehmers nach der Erfindung
- Fig. 3:: eine weitere Ausführungsform eines erfindungsgemäßen Wegaufnehmers.

Fig. 2 zeigt einen erfindungmäßigen induktiven Wegaufnehmer 1 in schematischer Darstellung. Der Tauchanker T wird um den Weg s verschoben und taucht dabei stärker in die wegmessende Induktionsspule W1 ein und erhöht dadurch deren Impedanz. Die wegmessende Induktionsspule W1 ist gemeinsam mit dem Vorwiderstand Rᵥ₁ in dem ersten 1/4-Brückenzweig a-b einer Wheatstone-Wechselstrombrücke angeordnet, die vom Generator G gespeist wird. Der zur Halbbrücke ergänzende zweite 1/4-Brückenzweig b-c enthält den Kompensationswiderstand R_{K} und den Vorwiderstand Rᵥ₂. Der Kondensator C zwischen den Punkten a und b dient zum phasenmäßigen Abgleich des Nullsignals. Die Ergänzungshalbbrücke wird durch die beiden Widerstände R_{H} gebildet. Die Meßspannung wird zwischen den Punkten b (Ende E der Induktionsspule) und d (Mittelpunkt der Ergänzungshalbbrücke) abgegriffen und zu einer Auswerteschaltung 2 geführt; hier verstärkt, phasenrichtig demoduliert (gleichgerichtet), gefiltert und als Ausgangsspannung Ua ausgegeben. Die breiter werdende Form der Induktionsspule W1 soll zeigen, daß die Windungen pro Längeneinheiten zwischen Anfang A und Ende E zunehmen. Diese Zunahme kann stetig oder aus fertigungstechnischen Gründen auch abschnittsweise erfolgen. Der Kompensationswiderstand R_{K} ist zur Temperaturkompensation dicht an der Induktionsspule W1 angeordnet. Die Vorwiderstände Rᵥ₁ und Rᵥ₂ reduzieren eine zu große Meßempfindlichkeit auf die gewünschten Nennempfindlichkeit von z.B. 80 mV/V.

Ein zweites Ausführungsbeispiel der Erfindung ist in Fig. 3 schematisch dargestellt. Sie zeigt einen Wegaufnehmer 1, dessen wegmessende Induktionsspule die induktiv aktive Wicklung W1 sowie eine zweite induktiv passive Wicklung W2.1, W2.2 aufweist. Die induktiv aktive Wicklung W1 ist in dem ersten 1/4-Brückenzweig a-b und die passive Wicklung W2.1, W2.2 in dem zweiten 1/4-Brückenzweig b-c der Wheatstone-Meßbrücke angeordnet. Die induktiv passive Wicklung W2.1, W2.2 dient zur Tempertaturkompensation und ersetzt den in Fig. 2 gezeigten Kompensationswiderstand R_{K}. Eine induktiv passive Wicklung W2.1, W2.2 läßt sich auf einfache Weise dadurch ausbilden, daß sie aus zwei Wicklungshälften W2.1 und W2.2 besteht, die mittels zweier parallel gewickelter Drähte ineinandergeschachtelt sind und die so zusammengeschaltet werden, daß sie der Strom i in jeweils entgegengesetzter Richtung durchfließt. Am einfachsten lassen sich solche Wicklungen mit sog. Bifilardrähten erstellen. Beide Wicklungen, die induktiv aktive Wicklung W1 und die induktiv passive Wicklung W2.1, W2.2 sind auf denselben Spulenkörper aufgewickelt und erstrecken sich über dieselbe Länge. Werden diese Spulen direkt übereinander gewickelt, so befinden sie sich in sehr engem termischen Kontakt. Im dargestellten Beispiel ist die induktiv passive Wicklung W2.1, W2.2 über die aktive Wicklung W1 gewickelt, liegt also außen. Die induktiv aktive Wicklung W1 und die induktiv passive Wicklung W2.1, W2.2 sind so ausgeführt, daß ihre Kupferwiderstände annähernd gleich sind, so daß sich ihre Temperatureinflüsse in den beiden 1/4-Brücken a-b und b-c zu Null kompensieren. Auch bei starken Temperaturgradienten treten dann praktisch keine Temperaturfehler auf. Die restliche Schaltung in Fig. 3 entspricht der Schaltung in Fig. 2. Nicht dargestellt ist eine Ausführungsform, bei der die aktive Wicklung W1 über die induktiv passive Wicklung W2.1, W2.2 gewickelt ist; hierbei liegt die aktive Wicklung außen.

Nicht näher dargestellt ist ferner eine Ausführungsform, bei der Wicklungslagen mit konstanten und/oder Wicklungslagen mit unterschiedlichem Windungsabstand vorgesehen sind.

Eine Ausführungsform, bei der die Windungsabstände der Kompensationswicklung sich im gleichen Verhältnis ändern wie die der Meßwicklung, ist ebenfalls nicht näher dargestellt.

## Patentansprüche

1. Induktiver Wegaufnehmer mit nur einer aktiven Meßwicklung (W1) in einer Wechselstrommeßbrücke und einem Tauchanker (T), die in Abhängigkeit des zu messenden Weges (s) relativ zueinander bewegbar sind, dadurch gekennzeichnet, daß die Windungsabstände der Meßwicklung (W1) in axialer Richtung unterschiedlich sind, so daß die Funktion der Impedanzänderung der Meßwicklung (W1) in Abhängigkeit vom Meßweg (s) einen nichtlinearen, vorzugsweise gekrümmten Verlauf aufweist.

2. Induktiver Wegaufnehmer nach Anspruch 1, dadurch gekennzeichnet, daß die Windungsabstände vom Tauchankereintrittsende aus abnehmen, so daß sich die Impedanz der Meßwicklung (W1) beim Eintauchen des Tauchankers (T) in die Meßwicklung (W1) stärker als linear erhöht.

3. Induktiver Wegaufnehmer nach Anspruch 1 oder Anspruch 2, dadurch gekennzeichnet, daß durch die unterschiedlichen Windungsabstände die Funktion der Impendanzänderung der Meßwicklung (W1) in Abhängigkeit vom Meßweg (s) eine Krümmung aufweist, die die Nichtlinearitäten der Meßanordnung kompensiert.

4. Induktiver Wegaufnehmer nach einem der vorhergehenden Ansprüche, dadurch gekennzeichnet, daß sich die Windungsabstände über die Länge der Meßwicklung (W1) abschnittsweise ändern.

5. Induktiver Wegaufnehmer nach einem der vorhergehenden Ansprüche, dadurch gekennzeichnet, daß sich die Windungsabstände über die Länge der Meßwicklung (W1) stetig nach einer vorgebbaren Funktion ändern.

6. Induktiver Wegaufnehmer nach einem der vorhergehenden Ansprüche, dadurch gekennzeichnet, daß die Meßwicklung (W1) aus mehreren Lagen besteht, wobei Lagen mit konstanten und/oder veränderlichen Windungsabständen vorgesehen sind.

7. Induktiver Wegaufnehmer nach einem der vorhergehenden Ansprüche, insbesondere nach Anspruch 1, dadurch gekennzeichnet, daß im ergänzenden Halbbrückenzweig ein oder mehrere temperaturabhängige Widerstände vorgesehen sind, die die temperaturabhängigen Impedanzänderungen der Meßwicklung kompensieren.

8. Induktiver Wegaufnehmer nach Anspruch 7, dadurch gekennzeichnet, daß der oder die temperaturabhängigen Widerstände zur Temperaturkompensation direkt auf der Induktionsspule angeordnet sind.

9. Induktiver Wegaufnehmer nach einem der vorhergehenden Ansprüche, dadurch gekennzeichnet, daß die Meßhalbbrücke bestehend aus der Meßwicklung und einem oder mehreren Kompensationswiderständen mittels zweier Widerstände (R2) und (R3) zur Vollbrückenschaltung ergänzt ist.

10. Induktiver Wegaufnehmer nach einem der vorhergehenden Ansprüche, insbesondere nach Anspruch 1, dadurch gekennzeichnet, daß im ergänzenden Brückenzweig eine induktionsarme Kompensationswicklung (W2.1/W2.2) vorgesehen ist, die konzentrisch zur Meßwicklung angeordnet und so geschaltet ist, daß der Strom in ihren Teilwicklungen (W2.1 und W2.2) in entgegengesetzter Richtung fließt (Fig.3).

11. Induktiver Wegaufnehmer nach Anspruch 10, dadurch gekennzeichnet, daß die Kompensationswicklung (W2.1/W2.2) als Paralleldrahtwicklung (Bifilarwicklung) ausgebildet ist.

12. Induktiver Wegaufnehmer nach Anspruch 10 oder Anspruch 11, dadurch gekennzeichnet, daß sich die Wicklung der Kompensationsspule (W2.1/W2.2) axial über die gleiche Länge wie die Meßwicklung (W1) erstreckt und beide Wicklungen übereinander gewickelt sind.

13. Induktiver Wegaufnehmer nach einem oder mehreren der vorhergehenden Ansprüche 10 bis 12, dadurch gekennzeichnet, daß die Gleichstromwiderstände (Kupferwiderstände) der Meßwicklung (W1) und der Kompensationswicklung (W2.1/W2.2) annähernd gleich sind.

14. Induktiver Wegaufnehmer nach einem der vorhergehenden Ansprüche 10 bis 13, dadurch gekennzeichnet, daß die Windungsabstände der Kompensationswicklung (W2.1/W2.2) sich im gleichen Verhältnis ändern, wie die der Meßwicklung (W1).
